# EUROPÄISCHE PATENTSCHRIFT

(11) **EP 0 503 008 B1**
(45) Veröffentlichungstag und Bekanntmachung des Hinweises auf die Patenterteilung: **14.09.1994**
(21) Anmeldenummer: 91910545.2
(22) Anmeldetag: 08.06.1991
(51) Int. Cl.: B29C 33/30, B29C 49/42, B29C 45/17, B29C 45/26

(54) **KUNSTSTOFFVERARBEITUNGSMASCHINE UND VERFAHREN ZUR SCHNELLEN UMRÜSTUNG**
PLASTICS PROCESSING MACHINE, AND METHOD FOR RAPIDLY SWITCHING OVER FROM PRODUCTION OF ONE PRODUCT TO ANOTHER
MACHINE DE TRANSFORMATION DES PLASTIQUES ET PROCEDE POUR SA CONVERSION RAPIDE

(30) Priorität: 29.09.1990 DE 4030925
(43) Veröffentlichungstag der Anmeldung: 16.09.1992
(73) Patentinhaber: MAUSER-WERKE GmbH, D-50321 Brühl (DE)
(72) Erfinder: WURZER, Ernst, D-5330 Königswinter (DE)
(86) Internationale Anmeldenummer: EP9101081
(87) Internationale Veröffentlichungsnummer: WO9205936

(56) Entgegenhaltungen:
- FR-A- 1 486 445
- GB-A- 1 251 422
- GB-A- 2 007 577
- US-A- 3 807 928
- US-A- 3 811 811
- PATENT ABSTRACTS OF JAPAN, vol. 13, No. 296 (M-846) (3644) 10 July 1989 & JP-A-1 87 323 (KYORAKU CO. LTD.) 31 March 1989 see the whole document

## Beschreibung

Die Erfindung betrifft eine Kunststoffverarbeitungsmaschine und ein Verfahren zur schnellen Umrüstung der Kunststoffverarbeitungsmaschine von einer ersten Produktform auf eine zweite Produktform.

Eine derartige Kunststoffverarbeitungsmaschine kann beispielsweise eine Spritzgußmaschine oder eine Blasformmaschine sein; derartige Kunststoffverarbeitungsmaschinen sind allgemein bekannt. Eine solche Blasformmaschine ist aus der GB-A-1 251 422 bekannt.

Bei diesen Maschinen besteht die folgende Problematik: Ein Hersteller von Kunststoff-Hohlkörpern hat beispielsweise nur eine Blasformmaschine zur Verfügung, auf der er normalerweise großvolumige Fässer mit einem Fassungsvermögen von z.B. 220 l herstellt. Nun hat er einen begrenzten Auftrag für z.B. 60 l-Kunststoff-Kanister erhalten, den er zwischendurch erledigen möchte. Dazu muß die Blasformmaschine stillgesetzt und die Blasform für die 220 l-Fässer von den Formaufspann-Platten sowie periphere Versorgungsleitungen abmontiert werden. Danach werden die kleineren Blasformhälten für den 60 l-Kunststoff-Kanister auf den Formaufspann-Platten befestigt und die entsprechenden Betriebsmittel-Leitungen für z.B. elektrische Energie, Hydrauliköl oder Kühlwasser angeschlossen. Nach Erledigung des Kanisterauftrages sollen wieder die 220 l-Fässer produziert werden und die Ummontage der Produktformen muß wieder in umgekehrter Richtung erfolgen. Dadurch entstehen vergleichsweise lange Stillstandszeiten und hohe Ausfallkosten an der Blasformmaschine.

Das gleiche gilt für eine Spritzgußmaschine bei der Auswechselung von Spritzgußformen. Dabei entstehen bereits durch relativ kurze Stillstandszeiten vergleichsweise hohe Produktionsausfälle, da mit einer Spritzgußmaschine üblicherweise höhere Produktstückzahlen erreicht werden als z.B. mit einer diskontinuierlich arbeitenden Blasformmaschine.
Es ist daher Aufgabe der vorliegenden Erfindung, verfahrenstechnische und konstruktive Maßnahmen anzugeben, die es auf einfache und kostengünstige Weise ermöglichen, eine Kunststoffverarbeitungsmaschine kurzfristig und schnell von einer ersten Produktform auf eine andere zweite Produktform umzurüsten und die dadurch bedingten Maschinenausfallzeiten möglichst niedrig zu halten.

Diese Aufgabe wird erfindungsgemäß bei einer Kunststoffverarbeitungsmaschine mit einer zweigeteilten Form, deren Formhälften zur Produktentnahme auf zwei auseinanderfahrbaren Formaufspann-Platten befestigt sind, verfahrenstechnisch dadurch gelöst, daß die Formhälften der ersten Produktform auf den Formaufspann-Platten verbleiben und die Formhälften der zweiten Produktform auf die verbleibenden Formhälften der ersten Produktform aufgespannt werden. Zweckmäßigerweise werden der zu verarbeitende schmelzflüssige Kunststoff-Rohstoff oder/und die Betriebsmittel wie z.B. elektrische Energie, Hydrauliköl oder Kühlwasser, mittels veränderbarer Rohrleitungen oder/und flexibler (Schlauch-)Leitungen bzw. Kabel zugeführt und gegebenenfalls wieder abgeführt.
Dazu ist in konstruktiver Ausgestaltung vorgesehen, daß die Formhälften der auf die Formaufspann-Platten aufgespannten ersten Produktform an ihren nach innen gewandten Seiten zusätzliche Befestigungsmittel zum Aufspannen der Formhälften einer zweiten Produktform aufweisen.

Durch diese Maßnahmen werden auf einfache Weise die Maschinenstillstandszeiten sowie die Produktionsausfallzeiten spürbar verkürzt. Bei programmgesteuerten Kunststoffverarbeitungsmaschinen kann dabei ohne Umstellung des Programmes die Maschine weiter betrieben werden, wenn im Schließweg der horizontal verfahrbaren Formhälften ein fest einstellbarer Abstandshalter vorgesehen ist, so daß die auseinanderfahrbaren Maschinenteile bzw. Formaufspann-Platten auf einen begrenzten, frei vorwählbaren Abstand definiert zusammenfahrbar sind.
Insbesondere wenn derartige Maschinenumrüstungen häufiger in zeitlich kurzen Abständen vorgenommen werden, kann es zweckmäßig sein, wenn zum Zuführen bzw. Ableiten von schmelzflüssigem Kunststoff oder/und Betriebsmitteln wie z.B. Hydrauliköl oder Kühlwasser veränderbare Rohrleitungen bzw. flexible Schlauchleitungen oder Stromkabel, gegebenenfalls mit Schnellverschlüssen (z.B. Bajonettverschlüsse) oder Steckverbindungen vorgesehen sind.

Eine Anpassung des Blasdornes an eine andere Produkt-Blasform kann bei einer Blasformmaschine mit dem Aufsetzen eines Verlängerungsstückes auf den Blasdorn schnell vorgenommen werden.

Aus obiger Beschreibung wird augenscheinlich, daß mit einfachen Mitteln und auf an sich simple Weise eine kostengünstige Betriebsweise mit höherer Produktionsauslastung einer kapitalintensiven Kunststoffverarbeitungsmaschine erreicht werden kann.

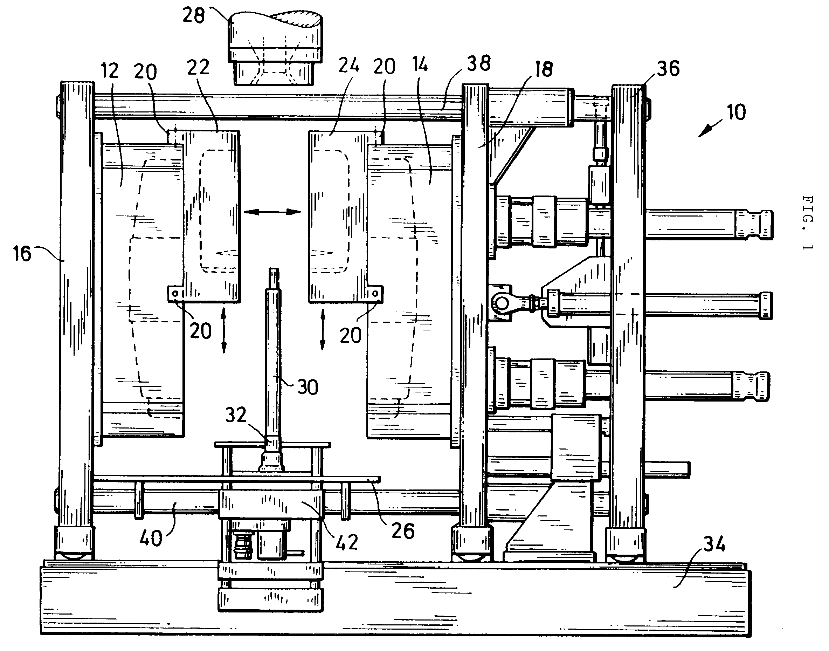

Die Erfindung wird nachfolgend anhand eines in der Zeichnung dargestellten Ausführungsbeispieles näher erläutert und beschrieben.

Die einzige Zeichnungsfigur stellt eine Blasformmaschine 10 in Seitenansicht dar.

Die Blasformmaschine 10 umfaßt einen Grundrahmen 34 und einen Vertikalträger 36, an dem im wesentlichen die Hydraulikantriebe für das Verfahren der Formaufspann-Platten 16,18 in horizontaler Richtung befestigt sind. Zur Führung der Formaufspann-Platten 16,17 ist ein oberer Horizontalträger 38 und ein unterer Horizontalträger 40 vorgesehen. Zwischen den beiden Formaufspann-Platten 16,18 ist unten auf dem Grundrahmen 34 ein Blasdorn-Bock 42 mit dem Blasdorn 32 zum Aufblasen eines schlauchförmigen Kunststoff-Vorformlings angeordnet, der aus einem direkt darüber, oberhalb der Formaufspann-Platten angeordneten Speicherkopf 28 bzw. aus dessen Ringdüse ausgedrückt wird. Auf den Formaufspann-Platten 16,18 sind üblicherweise die Formhälften des jeweils zu erblasenden Produktes bzw. Kunststoff-Hohlkörpers befestigt. Bei komplizierten Produktformen mit Hinterschneidungen wie z.B. Flanschringen an Faßkörpern oder angeformten Griffen bei Kanistern, können die Formhälften jeweils mit separat verschiebbaren Formschiebern versehen sein.
Die Funktion einer derartigen Blasformmaschine ist allgemein bekannt und braucht nicht weiter erläutert zu werden.
Die hier auf die Formaufspann-Platten 16,18 aufgespannten Formhälften 12,14 sind für ein 220 l-Spundfaß ausgelegt. Diese erste Produktform ist in gestrichelter Darstellung in die beiden Formhälften 12,14 eingezeichnet. Die Formhälften 12,14 sind oben und unten mit Formschiebern zum Anstauchen von umlaufenden Trage- und Transportringen versehen.

Gemäß der Erfindung sind nun die Formhälften 12,14 der ersten Produktform mit Befestigungsmitteln 20, wie z.B. Winkeleisen mit Gewindelöchern, zum Aufspannen von zwei Formhälften 22,24 einer zweiten Produktform versehen. Die Formhälften der zweiten Produktform sind zur Herstellung von 60 l-Kunststoff-Kanistern vorgesehen und weisen an ihren unteren Enden jeweils einen Formschieber zum Anstauchen eines Griffes in der Kanisterwandung auf. Die Verschiebbarkeit der Formschieber ist mit zwei vertikalen Pfeilen und die Verfahrbarkeit der Formhälften bzw. Formaufspann-Platten mit einem horizontalen Pfeil angedeutet.

Um die kleineren Kanister erblasen zu können, ist der für das großvolumige Faß passende Blasdorn 32 mit einem angepaßten Verlängerungsstück 30 für die Kanister-Blasformhälften 22,24 versehen, die gleichfalls entsprechende Befestigungsmittel aufweisen. Zur Einstellung der Horizontalverschiebbarkeit der Formaufspann-Platten bzw. als Anschlag dafür ist auf dem unteren Horizontalträger 40 ein fest einstellbarer Abstandshalter 26 vorgesehen, mittels dem eine einfache Anpassung der bewegten Maschinenteile an die zusätzlichen Formhälften vorgenommen werden kann.
Die Blasformhälften sind in üblicher Weise jeweils mit Hydraulikleitungen - zur Betätigung der Formschieber - und Kühlmittelleitungen versehen.
Für eine schnelle Ummontage sind diese Rohrleitungen bzw. flexiblen Schlauchleitungen mit Schnellverschlüssen bzw. Steckverbindungen ausgestattet, die wegen einer besseren Übersichtlichkeit in der Zeichnung nicht näher dargestellt sind.

## Patentansprüche

1. Verfahren zur schnellen Umrüstung einer Kunststoffverarbeitungsmaschine von einer ersten Produktform auf eine zweite Produktform,
mit einer zweigeteilten Form, deren Formhälften zur Produktentnahme auf zwei auseinanderfahrbaren Formaufspann-Platten befestigt sind,
**dadurch gekennzeichnet,** daß
die Formhälften (12,14) der ersten Produktform auf den Formaufspann-Platten (16,18) verbleiben und die Formhälften (22,24) der zweiten Produktform auf die verbleibenden Formhälften (12,14) der ersten Produktform aufgespannt werden.

2. Verfahren nach Anspruch 1,
**dadurch gekennzeichnet,** daß
der zu verarbeitende schmelzflüssige Kunststoff-Rohstoff oder/und die Betriebsmittel, wie z.B. elektrische Energie, Hydrauliköl oder Kühlwasser, mittels veränderbarer Rohrleitungen oder/und flexibler (Schlauch-) Leitungen bzw. Kabel zugeführt und gegebenenfalls wieder abgeführt werden.

3. Kunststoffverarbeitungsmaschine mit einer zweigeteilten Form, deren Formhälften (12,14) zur Produktentnahme auf zwei auseinanderfahrbaren Formaufspann-Platten (16,18) befestigt sind,
**dadurch gekennzeichnet,** daß
zur schnellen Umrüstung von einer ersten Produktform auf eine zweite Produktform die Formhälften (12,14) der auf die Formaufspann-Platten (16,18) aufgespannten ersten Produktform Befestigungsmittel (20) zum Aufspannen von Formhälften (22,24) einer zweiten Produktform aufweisen.

4. Kunststoffverarbeitungsmaschine nach Anspruch 3,
**dadurch gekennzeichnet,** daß
ein Abstandshalter (26) vorgesehen ist, so daß die auseinanderfahrbaren Maschinenteile bzw. Formaufspann-Platten (16,18) auf einen frei vorwählbaren Abstand zusammenfahrbar sind.

5. Kunststoffverarbeitungsmaschine nach Anspruch 3 oder 4,
**dadurch gekennzeichnet,** daß
veränderbare Rohrleitungen bzw. flexible Schlauchleitungen gegebenenfalls mit Schnellverschlüssen bzw. Steckverbindungen zum Zuführen bzw. Ableiten von schmelzflüssigem Kunststoff oder/und Betriebsmitteln wie z.B. Hydrauliköl, Kühlwasser oder elektrischem Strom vorgesehen sind.

6. Kunststoffverarbeitungsmaschine nach Anspruch 3, 4 oder 5,
**gekennzeichnet durch**
eine Ausbildung als Blasformmaschine (10), wobei der Blasdorn (32) zum Aufblasen des Kunststoffschlauches mit einem Verlängerungsstück (30) versehen ist.

## Claims

1. Process for rapid change-over in a plastics processing machine from a first product mould to a second product mould, having a mould divided into two, whereof the mould halves are secured to two mould clamping plates which may be moved apart for product removal, characterized in that the mould halves (12, 14) of the first product mould remain on the mould clamping plates (16, 18), and the mould halves (22, 24) of the second product mould are clamped onto the remaining mould halves (12, 14) of the first product mould.

2. Process according to Claim 1, characterized in that the molten raw plastics material to be processed and/or the operating means, such as electrical energy, hydraulic oil or cooling water, are supplied and in some cases removed again by means of changeable pipelines and/or flexible (hose) lines and cables.

3. Plastics processing machine having a mould divided into two, whereof the mould halves (12, 14) are secured to two mould clamping plates (16, 18) which may be moved apart for product removal, characterized in that, for rapid change-over from a first product mould to a second product mould, the mould halves (12, 14) of the first product mould clamped onto the mould clamping plates (16, 18) have securing means (20) for clamping on mould halves (22, 24) of a second product mould.

4. Plastics processing machine according to Claim 3, characterized in that a spacer (26) is provided so that the machine parts or mould clamping plates (16, 18), which may be moved apart, may be moved together to a freely pre-selectable spacing.

5. Plastics processing machine according to Claim 3 or 4, characterized in that changeable pipelines or flexible hose lines, where appropriate having quick-closing mechanisms or insertion-type connections, are provided for supplying or removing molten plastics and/or operating means such as hydraulic oil, cooling water or electrical current.

6. Plastics processing machine according to Claims 3, 4 or 5, characterized by a construction as a blow moulding machine (10), the blowing mandrel (32) being provided with a lengthening piece (30) for inflating the plastics hose.

## Revendications

1. Procédé pour la conversion rapide d'une machine de transformation des plastiques d'un premier type de production en un second type de production, comportant un moule en deux parties, dont les moitiés sont fixées sur des plaques de fixation du moule pouvant être écartées en vue du prélèvement du produit *caractérisé en ce que* les moitiés de moule (12), (14) pour le premier type de production restent sur les plaques de fixation du moule (16), (18) et que les moitiés de moule (22), (24) pour le second type de production sont montées sur les moitiés de moule (12), (14) destinées au premier type de production.

2. Procédé selon la revendication 1 *caractérisé en ce que* la matière première synthétique en fusion à travailler et/ou les moyens de production tels que l'énergie, l'huile hydraulique ou l'eau de refroidissement, sont amenés et en tant que de besoin évacués par des conduits tubulaires modifiables et/ou des tuyaux flexibles, respectivement des câbles.

3. Machine de transformation des plastiques avec un moule en deux parties dont les moitiés (12), (14) sont fixées sur deux plaques de fixation (16), (18) pouvant être écartées pour prélever le produit *caractérisée en ce qu'* en vue d'une conversion rapide d'un premier type de production en un second type de production, les moitiés de moule (12), (14) fixées sur les plaques de fixation (16), (18) et destinées au premier type de production, comportent des moyens de fixation pour le montage des moitiés de moule (22), (24) correspondant au second type de production.

4. Machine selon la revendication 3 *caractérisée par* un écarteur (26) de sorte que les pièces de machine, respectivement les plaques de fixation (16), (18) pouvant être écartées, peuvent être rapprochées l'une de l'autre jusqu'à une distance déterminée, choisie librement.

5. Machine selon les revendications 3 et 4 *caractérisée par* des conduits tubulaires modifiables, respectivement des tuyaux flexibles, pourvus en tant que de besoin d'éléments de fermeture rapide, respectivement de connecteurs à fiches, afin de permettre l'alimentation, respectivement l'évacuation de la matière synthétique en fusion et/ou des moyens de production tels que l'huile hydraulique, l'eau de refroidissement ou le courant électrique.

6. Machine selon les revendications 3, 4 ou 5 *caractérisé en ce qu'* elle est constituée d'une machine à souffler (10) dont la buse (32) pour le soufflage de l'ébauche en matière synthétique est pourvue d'une pièce de rallonge (30).
